(19) Europäisches Patentamt
European Patent Office
Office européen des brevets

(11) **EP 4 203 172 A1**

(12) **EUROPEAN PATENT APPLICATION**
published in accordance with Art. 153(4) EPC

(43) Date of publication:
**28.06.2023 Bulletin 2023/26**

(21) Application number: **20954463.4**

(22) Date of filing: **23.09.2020**

(51) International Patent Classification (IPC):
**H01M 50/531** *(2021.01)*      **H01M 50/183** *(2021.01)*

(52) Cooperative Patent Classification (CPC):
**Y02E 60/10**

(86) International application number:
**PCT/CN2020/117214**

(87) International publication number:
**WO 2022/061609 (31.03.2022 Gazette 2022/13)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Ningde Amperex Technology Ltd.
Ningde City, Fujian Province PRC 352100 (CN)**

(72) Inventors:
• LAI, Shibin
  Ningde City, Fujian Province, 352100 (CN)
• HUANG, Shaojun
  Ningde City, Fujian Province, 352100 (CN)
• LIN, Maocai
  Ningde City, Fujian Province, 352100 (CN)
• HE, Shifeng
  Ningde City, Fujian Province, 352100 (CN)

(74) Representative: **Icosa
83 avenue Denfert-Rochereau
75014 Paris (FR)**

(54) **BATTERY**

(57) This application provides a battery, including a packaging bag, an electrode assembly, an adapting member, and a sealing member. The electrode assembly is disposed in the packaging bag. The electrode assembly includes a first electrode plate and a first tab, and the first tab is electrically connected to the first electrode plate. A first end of the adapting member is connected to the first tab, and a second end of the adapting member protrudes from the packaging bag. The sealing member is disposed between the adapting member and the packaging bag. In a width direction of the battery, a width of the first tab is greater than or equal to a width of the sealing member. With an improved relationship in size between the first tab and the sealing member, the battery can effectively prevent the sealing member from piercing through the electrode plate when the battery falls down and can improve battery drop performance in a simple and effective way, without affecting the energy density or production process of the battery.

FIG. 1

Processed by Luminess, 75001 PARIS (FR)

EP 4 203 172 A1

## Description

## TECHNICAL FIELD

This application relates to a battery.

## BACKGROUND

When a battery falls down, its electrode assembly disposed in a battery packaging bag is susceptible to impact, causing a sealing structure on the packaging bag to pierce through an electrode plate, which in turn leads to an internal short circuit of the electrode assembly. In an existing design, insulation adhesive is attached to the electrode assembly to resolve the internal short circuit problem during falling down. However, disposing of the insulation adhesive reduces a battery energy density, and an attachment process of the insulation adhesive also increases a production process, thereby affecting production efficiency.

## SUMMARY

In view of the foregoing situation, this application provides a battery. With an improved relationship in size between a first tab and a sealing member, the battery can effectively prevent the sealing member from piercing through an electrode plate when the battery falls down and can improve battery drop performance in a simple and effective way, without affecting the energy density or production process of the battery.

An embodiment of this application provides a battery, including a packaging bag, an electrode assembly, an adapting member, and a sealing member. The electrode assembly is disposed in the packaging bag. The electrode assembly includes a first electrode plate and a first tab, and the first tab is electrically connected to the first electrode plate. A first end of the adapting member is connected to the first tab, and a second end of the adapting member protrudes from the packaging bag. The sealing member is disposed between the adapting member and the packaging bag. In a width direction of the battery, a width of the first tab is greater than or equal to a width of the sealing member.

In some embodiments, the first tab includes a first part and a second part electrically connected to the first part, where a width of the first part is greater than or equal to the width of the sealing member, and a width of the second part is less than or equal to the width of the sealing member.

In some embodiments, the first part is electrically connected to the first electrode plate, and a first end of the adapting member is electrically connected to the second part.

In some embodiments, the first tab includes one or more first tab units, and the one or more first tab units are stacked in a thickness direction of the battery.

In some embodiments, in a thickness direction of the battery, the battery includes a first surface and a second surface disposed opposite to each other, and a width of one of the one or more first tab units closest to the first surface or the second surface is greater than or equal to a width of the sealing member.

In some embodiments, in a width direction of the battery, a vertical distance between a side of the electrode assembly and a side of the packaging bag is a first distance D, a width of the first tab is W, a width of the sealing member is L, and

$$\frac{(\frac{W}{2} - D)}{(\frac{L}{2})} \geq 1.$$

In some embodiments, in a length direction of the battery, the first tab is coaxially disposed with the sealing member.

In some embodiments, a ratio of the width W of the first tab to the width L of the sealing member is $1 < W/L \leq 1.2$.

In some embodiments, in a length direction of the battery, the sealing member includes a first side part and a second side part disposed opposite to each other, the first side part is located inside the packaging bag, and the second side part is located outside the packaging bag.

In some embodiments, the electrode assembly further includes a second electrode plate, where a plurality of first electrode plates and a plurality of second electrode plates are stacked alternately to form the electrode assembly, or the first electrode plate and the second electrode plate are stacked and wound to form the electrode assembly; and in a length direction of the battery, the first electrode plate exceeds the second electrode plate.

In some embodiments, in the length direction of the battery, a vertical distance between the first electrode plate and the packaging bag is a second distance P, a vertical distance between the sealing member and the first electrode plate is a third distance S, a length of the first electrode plate exceeding the second electrode plate is a fourth distance A, and $S + A \geq P$.

In some embodiments, a value range of the second distance P is from 1.0 mm to 3.8 mm, a value range of the third distance S is from 1.0 mm to 4.3 mm, and a value range of the fourth distance A is from 0.1 mm to 1.2 mm.

In some embodiments, an edge of the sealing member is provided with a rounded corner.

In some embodiments, the first tab is disposed in the packaging bag in a bending state.

In some embodiments, the bending state of the first tab includes one of V-type or U-type.

In some embodiments, on a projection plane perpendicular to the length direction of the battery, an orthogonal projection of the adapting member at least partially falls within an orthogonal projection range of the first tab.

In some embodiments, in the width direction of the battery, an orthogonal projection of the adapting member falls within an orthogonal projection of the first tab.

In some embodiments, the battery further includes an insulation member, where the insulation member is disposed between a body portion of the electrode assembly and the first tab in a bending state.

With an improved relationship in size between the first tab and the sealing member, the battery can effectively prevent the sealing member from piercing through the electrode plate when the battery falls down and can improve battery drop performance in a simple and effective way, without affecting the energy density or production process of the battery.

## BRIEF DESCRIPTION OF DRAWINGS

FIG. 1 is a schematic structural diagram of a battery with a packaging bag removed according to an embodiment of this application.
FIG. 2 is a schematic structural diagram of the battery in FIG. 1 with a tab folded.
FIG. 3 is a schematic structural side view of the battery in FIG. 2 according to an embodiment.
FIG. 4 is a schematic structural side view of the battery in FIG. 2 according to an embodiment.
FIG. 5 is a schematic structural side view of the battery in FIG. 2 according to an embodiment.
FIG. 6 is a front schematic structural diagram of the battery in FIG. 2 disposed in a packaging bag.
FIG. 7 is a schematic structural diagram of the battery in FIG. 6 with a part of a packaging bag removed.

Reference signs of main components:

| | |
|---|---|
| Battery | 100 |
| First surface | 101 |
| Second surface | 102 |
| Electrode assembly | 10 |
| First electrode plate | 11 |
| First tab | 110 |
| First part | 111 |
| Second part | 112 |
| First tab unit | 1101 |
| Second electrode plate | 12 |
| Second tab | 120 |
| Separator | 13 |
| first end face | 14 |
| Adapting member | 20 |
| First end | 21 |
| Second end | 22 |
| Packaging bag | 30 |

(continued)

| | |
|---|---|
| Sealing member | 40 |
| First side part | 41 |
| Second side part | 42 |
| Insulation member | 50 |

## DETAILED DESCRIPTION

The following clearly and completely describes the technical solutions in the examples of this application with reference to the accompanying drawings in the examples of this application. Apparently, the described examples are only some but not all of the examples of this application.

It should be noted that when a component is referred to as being "fastened to" another component, it may be directly fastened to the another component, or there may be a component in between. When a component is deemed as being "connected to" another component, it may be directly connected to the another component, or there may be a component in between. When a component is deemed as being "provided on" another component, it may be directly provided on the another component, or there may be a component in between. The terms "vertical", "horizontal", "left", "right", and other similar expressions as used herein are for illustration only.

Unless otherwise defined, all technical and scientific terms used herein shall have the same meanings as commonly understood by those skilled in the art to which this application belongs. The terms used herein in the specification of this application are merely intended to describe specific embodiments but not intended to limit this application. The term "and/or" used herein includes any and all combinations of one or more related listed items.

An embodiment of this application provides a battery, including a packaging bag, an electrode assembly, an adapting member, and a sealing member. The electrode assembly is disposed in the packaging bag. The electrode assembly includes a first electrode plate and a first tab, and the first tab is electrically connected to the first electrode plate. A first end of the adapting member is connected to the first tab, and a second end of the adapting member protrudes from the packaging bag. The sealing member is disposed between the adapting member and the packaging bag. In a width direction of the battery, a width of the first tab is greater than or equal to a width of the sealing member.

With an improved relationship in size between the first tab and the sealing member, the battery can effectively prevent the sealing member from piercing through the electrode plate when the battery falls down and can improve battery drop performance in a simple and effective way, without affecting the energy density or production process of the battery.

Some embodiments of this application are described in detail. In absence of conflicts, the following embodiments and features in the embodiments may be combined.

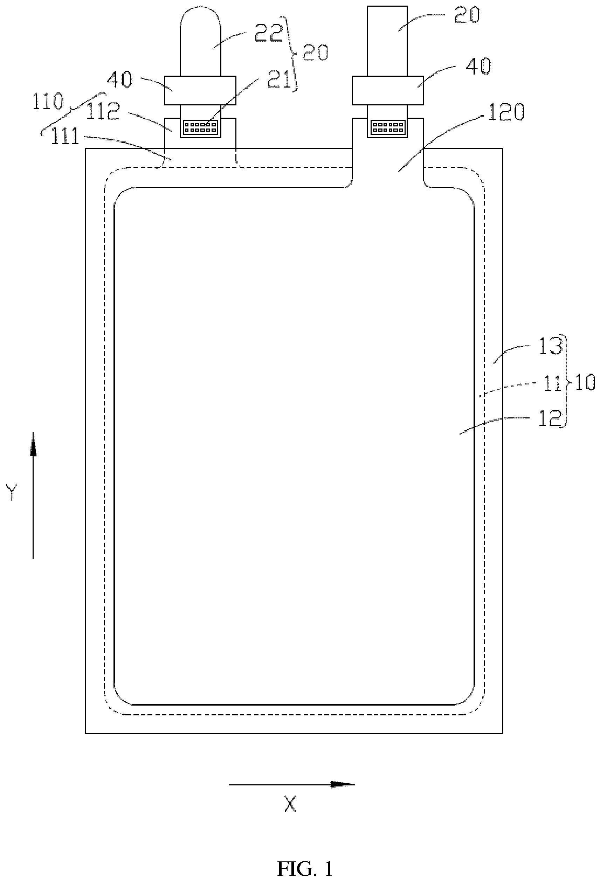

Refer to FIG. 1 to FIG. 3. In some embodiments of this application, a battery 100 includes an electrode assembly 10, an adapting member 20, a packaging bag 30, and a sealing member 40. The electrode assembly 10 is disposed in the packaging bag 30, the adapting member 20 is electrically connected to the electrode assembly 10, and one end of the adapting member 20 protrudes from the packaging bag 30. The sealing member 40 is disposed between the adapting member 20 and the packaging bag 30, and connects the adapting member 20 and the packaging bag 30.

The electrode assembly 10 includes a first electrode plate 11, a second electrode plate 12, and a separator 13. According to an embodiment of this application, the electrode assembly 10 includes a plurality of first electrode plates 11 and second electrode plates 12, and the first electrode plates 11 and the second electrode plates are stacked alternately. According to another embodiment of this application, the first electrode plate 11 and the second electrode plate 12 are stacked and wound to form the electrode assembly 10. The first electrode plate 11 and the second electrode plate 12 have opposite polarities, and the separator 13 is disposed between the first electrode plate 11 and the second electrode plate 12. The electrode assembly 10 further includes a first tab 110 and a second tab 120. The first tab 110 is electrically connected to the first electrode 11. The second tab 120 is electrically connected to the second electrode 12.

The adapting member 20 includes a first end 21 and a second end 22 disposed opposite to each other. The first end 21 of one adapting member 20 is connected to the first tab 110, and the second end 22 of the adapting member 20 protrudes from the packaging bag 30. The first end 21 of another adapting member 20 is connected to the first tab 120, and the second end 22 of the another adapting member 20 protrudes from the packaging bag 30. In a direction of a width of the battery 100, that is, a direction indicated by an arrow X in FIG. 1, widths of the first tab 110 and the second tab 120 are both greater than or equal to a width of the sealing member 40. When the battery 100 falls down, the first tab 110 and the second tab 120 with relatively larger widths can prevent the sealing member 40 from hitting the electrode plate, so as to prevent the electrode plate from being pierced and causing a short circuit inside the battery 100.

According to an embodiment of this application, the first tab 110 includes a first part 111 and a second part 112 electrically connected to the first part 111. The first part 111 is electrically connected to the first electrode plate 11, and the second part 112 is electrically connected to the first end 21 of the adapting member 20. A width of the first part 111 may be greater than or equal to a width of the sealing member 40, and a width of the second part 112 may be less than or equal to a width of the sealing member 40, so as to prevent an end of the first tab 110 connected to the switching member 20 from affecting the sealing of the packaging bag 30. The electrical connection manner includes but is not limited to welding and conductive adhesive bonding.

In a length direction of the battery 100, that is, a direction indicated by an arrow Y in FIG. 1, a top of the first electrode plate 11 exceeds a top of the second electrode plate 12. Thus, when the battery 100 falls down, even if a bottom corner of the sealing member 40 accidentally pierces through a top area of the first electrode plate 11, no internal short circuit occurs because the area does not overlap the second electrode plate 12, thereby further preventing the internal short circuit problem of the battery 100 when the battery falls down.

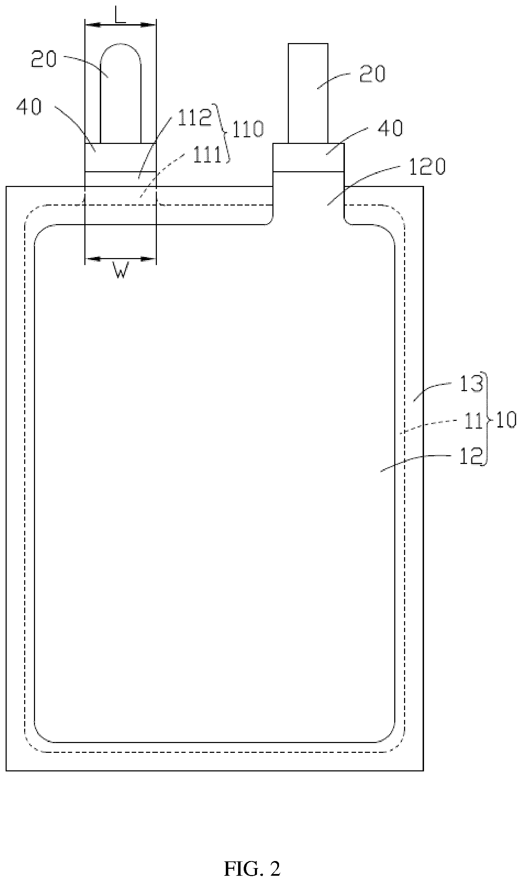

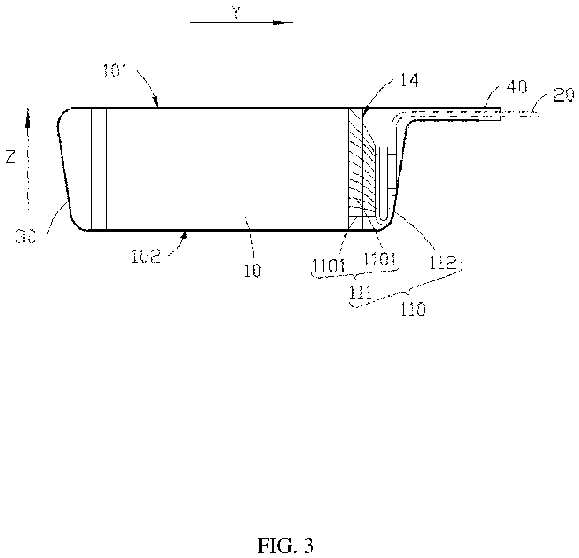

Refer to FIG. 2 and FIG. 3. In the length direction of the battery 100, one end of the electrode assembly 10 on which the first tab 110 is disposed includes a first end surface 14. To improve the energy density of the battery 100 and reduce the length size of the battery 100, the second part 112 of the first tab 110 is folded toward the first end surface 14 to fit into the packaging bag 30 in a bending state. When the battery 100 falls down, the first part 111 with a large width serves to block the sealing member 40. The bending state of the second part 112 includes but is not limited to V-type, U-type, L-type, and N-type.

In some embodiments of this application, on a projection plane perpendicular to the length direction of the battery 100, an orthogonal projection of the adapting member 20 at least partially falls within an orthogonal projection range of the first tab 110. To be specific, refer to FIG. 3. In the width direction of the battery 100, an orthogonal projection of the adapting member 20 falls within an orthogonal projection of the first tab 110.

In some embodiments, the first tab 110 further includes one or more first tab units 1101 configured to reduce an internal resistance of the battery and improve charge/discharge rate performance of the battery 100. In a thickness direction of the battery 100, that is, a direction indicated by an arrow Z in FIG. 3, the one or more first tab units 1101 are stacked to form the first part 111 of the first tab 110. According to an embodiment of this application, the width of each one of the one or more first tab units 1101 may be greater than or equal to the width of the sealing member 40.

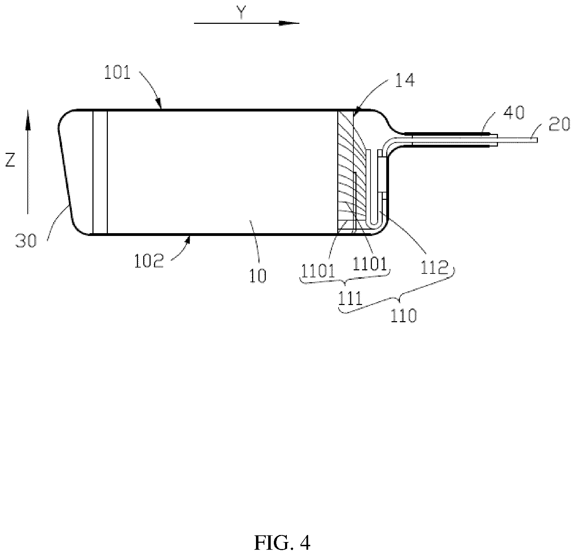

Refer to FIG. 3 and FIG. 4. In another embodiment, in the thickness direction of the battery 100, the battery 100 includes a first surface 101 and a second surface 102 disposed opposite to each other. In the width direction of the battery 100, an orthogonal projection of the sealing member 40 is approximately flush with an orthogonal projection of the first surface 101 or an orthogonal projection of the second surface 102. Alternatively, the orthogonal projection of the sealing member 40 is located between the first surface 101 and the second surface 102. When the battery 100 falls down, the sealing member 40 hits the one or more first tab units 1101 having a higher orthogonal projection position than the sealing member 40 in the thickness direction. To save materials and reduce manufacturing costs of the battery 100, in the one or more first tab units 1101 at an orthogonal projection positions higher than the sealing member 40 in the thickness direction, a width of any one or more of the one or more first tab units 1101 is greater than or equal to a width of the sealing member 40, and a width of one of the one or more first tab units 1101 at another position may be less than the width of the sealing member 40.

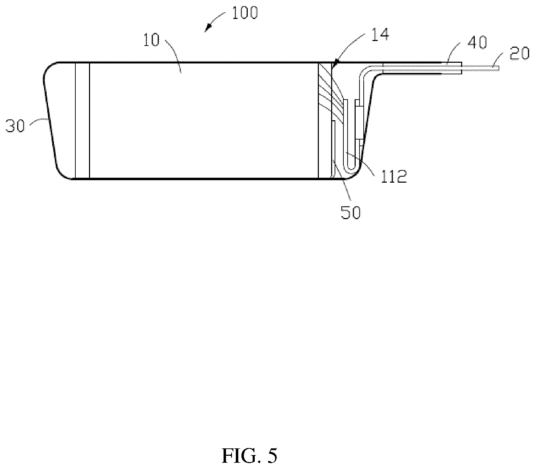

Refer to FIG. 5. In some embodiments, the battery 100 further includes an insulation member 50, and the insulation member 50 is disposed between a body portion of the electrode assembly 10 and a second part 112 in a bending state, so as to prevent the second part 112 from coming into contact with the electrode plate and causing short circuit in a folding process.

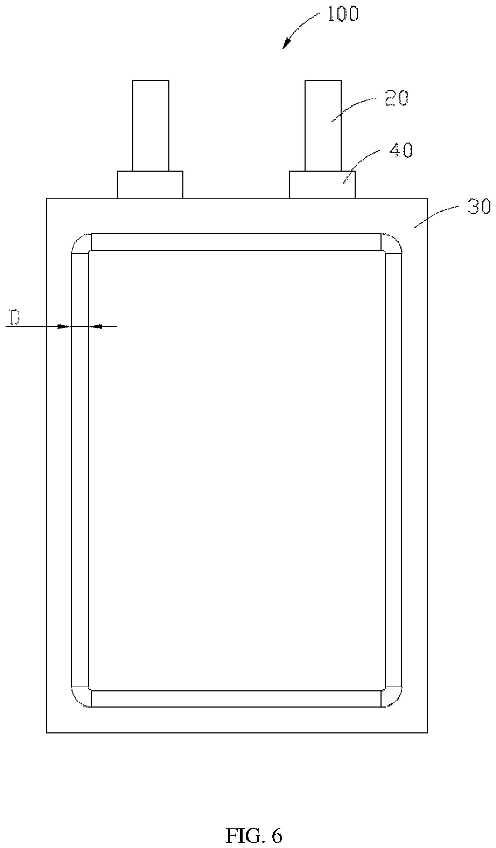

Refer to FIG. 2 and FIG. 6. In some embodiments, the first tab 110 is coaxially disposed with the sealing member 40 in the length direction of the battery 100. In the width direction of the battery 100, a vertical distance between the side of the electrode assembly 10 and the side of the packaging bag 30 is a first distance D, a width of the first tab 110 is W, and a width of the sealing member 40 is L. The first distance D is a maximum moving distance of the electrode assembly 10 in the width direction of the battery when the battery 100 falls down. To prevent the sealing member 40 from piercing through the electrode plate after the electrode assembly 10 is moved, a relationship between the first distance D, the width W of the first tab 110, and the width L of the sealing member 40 is as follows:

$$\frac{(\frac{W}{2} - D)}{(\frac{L}{2})} \geq 1.$$

Specifically, in some embodiments, a ratio of the width W of the first tab 110 to the width L of the sealing member 40 is $1 < W/L \leq 1.2$.

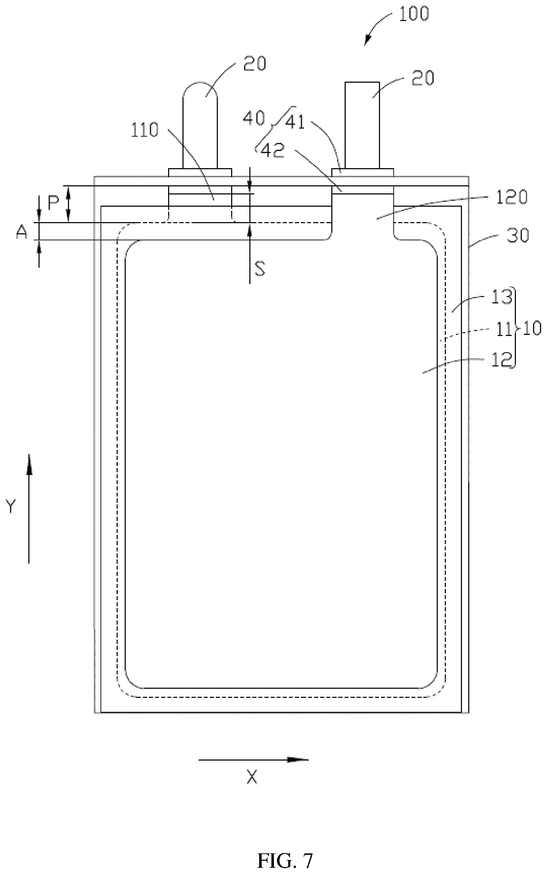

Refer to FIG. 7. In the length direction of the battery 100, the sealing member 40 includes a first side part 41 and a second side part 42 disposed opposite to each other. The first side part 41 is located inside the packaging bag 30, and the second side part 42 is located outside the packaging bag 30, so as to better seal a connection between the first tab 110 and the packaging bag 30 and a connection between the second tab 120 and the packaging bag 30.

In the length direction of the battery 100, a vertical distance between a top of the first electrode plate 11 and the packaging bag 30 is a second distance P, a vertical distance between the bottom of the sealing member 40 and the top of the first electrode plate 11 is a third distance S, and a length of the first electrode plate 11 that exceeds the second electrode plate 12 is a fourth distance A. The third distance S is a maximum moving distance of the sealing member 40 in the length direction of the battery. To avoid a short circuit caused when the sealing member 40 simultaneously pierces through the first electrode plate 11 and the second electrode plate 12, a relationship between the second distance P, the third distance S, and the fourth distance A is as follows:

$$S + A \geq P .$$

In some embodiments, a value range of the second distance P is from 1.0 mm to 3.8 mm, a value range of the third distance S is from 1.0 mm to 4.3 mm, and a value range of the fourth distance A is from 0.1 mm to 1.2 mm.

In some embodiments of this application, the sealing member 40 is approximately rectangular. It can be understood that, in another embodiment, the sealing member 40 may alternatively be in an oval shape, a polygon shape, or the like. This application is not limited thereto. To further reduce damage to the electrode assembly 10 by the sealing member 40 when the battery falls down, an edge of the sealing member 40 may be further provided with a rounded corner.

The foregoing embodiments are merely intended to describe the technical solutions of this application, but not intended to constitute any limitation. Although this application is described in detail with reference to the foregoing preferred embodiments, persons of ordinary skill in the art should understand that modifications or equivalent replacements can be made to the technical solutions of this application, without departing from the spirit and scope of the technical solutions of this application.

**Claims**

1. A battery, **characterized in that**, the battery comprises:

   a packaging bag;
   an electrode assembly disposed in the packaging bag, wherein the electrode assembly comprises a first electrode plate and a first tab, and the first tab is electrically connected to the first electrode plate; and
   an adapting member, wherein a first end of the adapting member is connected to the first tab, and a second end of the adapting member protrudes from the packaging bag;
   wherein a sealing member is disposed between the adapting member and the packaging bag, wherein in a width direction of the battery, a width of the first tab is greater than or equal to a width of the sealing member.

2. The battery according to claim 1, **characterized in**

**that**, the first tab comprises a first part and a second part electrically connected to the first part; wherein a width of the first part is greater than or equal to the width of the sealing member; and a width of the second part is less than or equal to the width of the sealing member.

3. The battery according to claim 2, **characterized in that**, the first end of the adapting member is electrically connected to the second part.

4. The battery according to claim 1, **characterized in that**, the first tab comprises one or more first tab units, and the one or more first tab units are stacked in a thickness direction of the battery.

5. The battery according to claim 4, **characterized in that**, in the thickness direction of the battery, the battery comprises a first surface and a second surface disposed opposite to each other; and
a width of one of the one or more first tab units closest to the first surface or the second surface is greater than or equal to a width of the sealing member.

6. The battery according to claim 1, **characterized in that**, in a width direction of the battery, a vertical distance between a side of the electrode assembly and a side of the packaging bag is a first distance D, a width of the first tab is W, a width of the sealing member is L, and

$$\frac{(\frac{W}{2} - D)}{(\frac{L}{2})} \geq 1$$

.

7. The battery according to claim 6, **characterized in that**, in a length direction of the battery, the first tab is coaxially disposed with the sealing member.

8. The battery according to claim 1, **characterized in that**, a ratio of the width W of the first tab to the width L of the sealing member is $1 < W/L \leq 1.2$.

9. The battery according to claim 1, **characterized in that**, the electrode assembly comprises a second electrode plate; wherein a plurality of first electrode plates and a plurality of second electrode plates are stacked alternately to form the electrode assembly, or the first electrode plate and the second electrode plate are stacked and wound to form the electrode assembly; and in a length direction of the battery, the first electrode plate exceeds the second electrode plate.

10. The battery according to claim 9, **characterized in that**, in the length direction of the battery, a vertical distance between the first electrode plate and the packaging bag is a second distance P, a vertical distance between the sealing member and the first electrode plate is a third distance S, a length of the first electrode plate exceeding the second electrode plate is a fourth distance A, and $S + A \geq P$.

11. The battery according to claim 10, **characterized in that**, a value range of the second distance P is from 1.0 mm to 3.8 mm, a value range of the third distance S is from 1.0 mm to 4.3 mm, and a value range of the fourth distance A is from 0.1 mm to 1.2 mm.

12. The battery according to claim 1, **characterized in that**, an edge of the sealing member is provided with a rounded corner.

13. The battery according to claim 1, **characterized in that**, the first tab is disposed in the packaging bag in a bending state.

14. The battery according to claim 13, **characterized in that**, the bending state of the first tab comprises one of V-type or U-type.

15. The battery according to claim 13, **characterized in that**, on a projection plane perpendicular to the length direction of the battery, an orthogonal projection of the adapting member at least partially falls within an orthogonal projection range of the first tab.

16. The battery according to claim 15, **characterized in that**, in the width direction of the battery, an orthogonal projection of the adapting member falls within an orthogonal projection of the first tab.

17. The battery according to claim 13, **characterized in that**, the battery comprises an insulation member, wherein the insulation member is disposed between a body portion of the electrode assembly and the first tab in a bending state.

FIG. 1

FIG. 2

FIG. 3

FIG. 4

FIG. 5

FIG. 6

FIG. 7

## INTERNATIONAL SEARCH REPORT

International application No.

**PCT/CN2020/117214**

**A. CLASSIFICATION OF SUBJECT MATTER**

H01M 50/531(2021.01)i; H01M 50/183(2021.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNABS; CNTXT; VEN; USTXT; WOTXT; EPTXT; CNKI: 密封, 极耳, 端子, 引线, 连接片, 连接线, 宽度, 幅度, 幅宽, seal +, terminal, lead, tab, lug, width, breadth

**C. DOCUMENTS CONSIDERED TO BE RELEVANT**

| Category* | Citation of document, with indication, where appropriate, of the relevant passages | Relevant to claim No. |
|---|---|---|
| X | CN 110088944 A (LG CHEMICAL LTD.) 02 August 2019 (2019-08-02) description, paragraphs [0018]-[0023], and figures 3-5 | 1, 4, 9, 12-17 |
| A | CN 110088944 A (LG CHEMICAL LTD.) 02 August 2019 (2019-08-02) description, paragraphs [0018]-[0023], and figures 3-5 | 2, 3, 5-8, 10, 11 |
| A | CN 208738353 U (XU, Ronglin et al.) 12 April 2019 (2019-04-12) entire document | 1-17 |
| A | CN 111403789 A (DONGGUAN AMPEREX TECHNOLOGY LIMITED) 10 July 2020 (2020-07-10) entire document | 1-17 |
| A | JP 2013171618 A (SANYO ELECTRIC CO., LTD.) 02 September 2013 (2013-09-02) entire document | 1-17 |

☐ Further documents are listed in the continuation of Box C.　　☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **20 May 2021** | **15 June 2021** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088 China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2020/117214**

| Patent document cited in search report | | | Publication date (day/month/year) | Patent family member(s) | | | Publication date (day/month/year) |
|---|---|---|---|---|---|---|---|
| CN | 110088944 | A | 02 August 2019 | EP | 3531477 | A4 | 22 January 2020 |
| | | | | US | 2019207196 | A1 | 04 July 2019 |
| | | | | KR | 20180119106 | A | 01 November 2018 |
| | | | | EP | 3531477 | A1 | 28 August 2019 |
| | | | | JP | 2019535111 | A | 05 December 2019 |
| | | | | WO | 2018199511 | A1 | 01 November 2018 |
| | | | | IN | 201917018381 | A | 11 October 2019 |
| CN | 208738353 | U | 12 April 2019 | None | | | |
| CN | 111403789 | A | 10 July 2020 | EP | 3678222 | A1 | 08 July 2020 |
| | | | | JP | 2020109737 | A | 16 July 2020 |
| | | | | US | 2020212408 | A1 | 02 July 2020 |
| JP | 2013171618 | A | 02 September 2013 | None | | | |

Form PCT/ISA/210 (patent family annex) (January 2015)